# EUROPEAN PATENT SPECIFICATION

(11) **EP 1 590 866 B1**
(45) Date of publication and mention of the grant of the patent: **17.01.2007**
(21) Application number: 04705485.3
(22) Date of filing: 27.01.2004
(51) Int. Cl.: H02H 9/02

(54) **FAULT CURRENT LIMITERS (FCL) WITH THE CORES SATURATED BY SUPERCONDUCTING COILS**
FEHLERSTROMBEGRENZER MIT VON SUPRALEITENDEN WICKLUNGEN GESÄTTIGTEN KERNEN
LIMITEURS DE COURANT DE DEFAUT (FCL) A NOYAUX SATURES PAR DES BOBINES SUPRACONDUCTRICES

(30) Priority: 27.01.2003 US 442533 P
(43) Date of publication of application: 02.11.2005
(73) Proprietor: BAR ILAN UNIVERSITY, 52115 Ramat Gan (IL)
(72) Inventor: FRIEDMAN, Alexander, 64920 Tel Aviv (IL); ZARUDI, Moshe, 13200 Tzfat (IL); SHAKED, Noam, 58235 Holon (IL); WOLFUS, Shuki, 55521 Kiriat-Ono (IL); SINVANI, Moshe, 75259 Rishon Lezion (IL); YESHURUN, Yosef, 55900 Ganei Tikvah (IL)
(74) Representative: Marko, Jozsef
(86) International application number: PCT/IL2004/000073
(87) International publication number: WO 2004/068670

(56) References cited:
- US-A- 3 219 918
- US-A- 3 221 280
- US-A- 4 045 823
- US-A- 4 155 034
- US-A- 5 930 095
- NORRIS W T ET AL: "Fault current limiters using superconductors" CRYOGENICS, IPC SCIENCE AND TECHNOLOGY PRESS LTD. GUILDFORD, GB, vol. 37, no. 10, 1 October 1997 (1997-10-01), pages 657-665, XP004097344 ISSN: 0011-2275

## Description

### FIELD OF THE INVENTION

This invention relates to current limiting devices for AC electric grid.

### REFERENCES

In the following description, reference will be made to the following non-patent publications:
**[1]** B.P. Raju, K. C. Parton, T.C. Bartram, "A current limiting device using superconducting d.c. bias: applications and prospects," *IEEE Transactions on Power Apparatus & Systems,* vol. 101, pp. 3173-3177, 1982.
**[2]** J.X. Jin, S.X. Dou., C. Grantham, and D. Sutanto "Operating principle of a high T-c superconducting saturable magnetic core fault current limiter". *Physica C,* 282, Part 4: p. 2643-2644, 1997.
**[3]** J.X. Jin, S.X. Dou., C. Cook, C. Grantham, M.Apperley, and T.Beals, "Magnetic saturable reactor type HTS fault current limiter for electrical application". *Physica C,* 2000. 341-348: p. 2629-2630.
**[4]** V. Keilin, I. Kovalev, S. Kruglov, V. Stepanov, I. Shugaev, V. Shcherbakov, I.Akimov, D. Rakov, and A. Shikov, "Model of HTS three-phase saturated core fault current limiter", *IEEE Transactions on Applied Superconductivity,* vol. 10, pp. 836-839, 2000.
**[5]** R.F. Giese, "Fault-current limiters - A second look," Argonne Nat. Lab., Argonne, USA March 16, 1995.

### BACKGROUND OF THE INVENTION

Fault current limiters (FCL) are expected to be among the first and most important power applications of high temperature superconductors (HTS). The advantages of HTS-FCL as compared to conventional circuit breakers, used world-wide in national electricity circuits, are their quick response and fast recovery, relatively low energy dissipation, tolerance to large fault currents and the possibility for virtually unlimited number of operations.

More particularly, the present invention relates to current limiting devices based on a superconducting coil with saturated core. Such a device comprises at least two coils with ferromagnetic cores for each phase connected in series with a load. On both cores there are superconducting bias coils connected to a DC power supply. At normal state the bias coils saturate the cores and the impedance of the current limiter is very low. When the load decreases, the current sharply increases and the cores are driven out of saturation at alternate half-cycles. As a result the impedance of the current limiter builds up and limits the increase of the current.

In US Patent No. 3,671,810 this principle has been proposed for transient current limiting in electronic circuits. US Patent No. 4,045,823 to K.C. Parton *et al*. which is considered to represent the closest prior art, describes a current limiting device for a power alternating current system. The current limiter has for each phase a pair of saturable reactors with the coils wound in opposite directions relative to superconducting bias coils. US Patent No. 4,117,524 also to K.C. Parton *et. al.* describes a modified form of current limiter having a screen of conductive material surrounding the bias winding to shield it against the alternating magnetic field. In this patent, one common bias coil is used for two reactors. Raju *et al.* [1] realize their current limiting device with a superconducting bias coil operating in a liquid helium bath and demonstrate its efficiency. US Patent No. 4,257,080 (Bartram *et al.*) describes a further improvement of this current limiting device by placing the common bias coil on the central limbs of three or six cores of a three-phase reactor.

*"Fault current limiters. using superconductors"* Cryogenics 1997 Vol. 37 Number 10 p. 657-665 (Norris) teaches an FCL similar to Parton in that a common bias and a closed core are provided.

US 3,219,918 (Trench) discloses a current limiting apparatus shows an arrangement having a saturable reactor having a core on which a DC coil and an AC coil are wound and connected such that the AC flux produced in the core during positive half cycles of alternating line current in the AC coil desaturates the core. However, there is no suggestion to use feedback coils that are energized at the moment of increasing voltage on the current limiter so as to fully or partially compensate for the magnetizing effect of the DC coils, and thus increase effective permeability of the cores such that the impedance of the AC coils increases.

US 4,155,034 (Logan) discloses a control circuit that comprises two series-connected pairs of saturable reactors, the two pairs being connected in parallel between a supply line and a load. Between one pair of reactors are connected two back-to-back diodes, the center tap of which is connected to the common point of the other pair of reactors. The difference between the voltages across the reactor main winding causes feedback which increases the magnetization of the cores and reduces further the impedance of the low impedance windings.

US 5,930,095 (Joo *et al.*) discloses a superconducting current limiting device for protecting an electric circuit from a fault current. The device comprises a magnetically saturable core having saturated and non-satnratsd states and an input coil for electrically coupling the core to the electric circuit, the input coil drawing a current therethrough so that a magnetic flux is generated in the core due to the current.

US 3,221,280 (Malsbary *et al.*) discloses a non-superconducting multi-phase saturable reactor that has no feedback

Several laboratory scale models of saturable core current limiters have been realized with superconducting coils made of high-temperature superconductors (HTS) [2, 3, 4]. These one-phase [2, 3] and three-phase [4] devices were built according the design proposed in the above-mentioned US Patents.

The current limiter with saturated core has decisive advantages as compared with other superconducting current limiters:
- its current limiting effect is not dependent on transition of the superconducting element to normal state, i.e. superconducting state is maintained all the time and no recovery time is necessary to return to ready state after fault. Moreover there is no dissipation of energy concerned with transition of the superconducting element to normal state;
- the superconducting element is a coil made of standard superconducting wire manufactured on an industrial scale.
- the superconducting coil operates in DC mode and is exposed to low AC magnetic fields.

The known designs of FCL with saturated core have the essential shortcomings that prevent the development and realization of this type of FCL. Its weakest points are the large weight and dimensions that are about twice the weight and dimensions of a transformer of the same power [5]. Also, in known FCLs of this type the impedance of the AC coils does not reach its maximum possible value because the bias coils produce the magnetic flux in the cores that reduces the impedance of AC coils. This feature is necessary at normal conditions but it has a negative effect at fault conditions. Furthermore, at fault conditions the alternating magnetic field of the AC coils affects the superconducting bias coil, decreasing its critical current. In known designs, a cryostat with bias coils is placed in the window of the core thus increasing its size.

A first objective of the present invention is to reduce the mass and dimensions of the ferromagnetic core of a current limiter having a saturated core, thereby reducing also the losses of the device.

A further objective of the present invention is to propose a new design of the current limiter with saturated core where the bias field is compensated fully or partially at the time of a fault.

Yet another objective of the present invention is to provide a modular design of current limiter with saturated core that can be manufactured at low cost.

Additional objectives of the present invention are:
- to reduce the alternating magnetic field on the superconducting bias coils thus preventing a degradation of their critical current;
- to propose a design that leaves sufficient room for the cryostat of the bias coils without increasing the core size; and
- to ensure the possibility of adjusting the limited value of the fault current according to system requirements.

### SUMMARY OF THE INVENTION

These objects are realized in accordance with a first aspect of the invention by a current limiting device for an AC supply, said current limiting device comprising for each phase of the AC supply:
a magnetic circuit,
at least one superconducting bias coil surrounding said magnetic circuit for biasing the magnetic circuit into saturation at normal conditions, and
two series-connected AC coils adapted to be connected in series with a load;
each of said AC coils being placed on respective limbs of the magnetic circuit and being configured so as to produce magnetic fields of mutually opposing polarities so that in use during successive half cycles of the AC supply one of the AC coils produces a magnetic field that opposes a magnetic field of the bias coil;
**characterized in that:**
said magnetic circuit comprises a pair of open elongated rod-shaped magnetic limbs.

There may also be optionally provided feedback coils that are energized at the moment of increasing voltage on the FCL and fully or partially compensate for the magnetizing effect of the bias coils, thus increasing effective permeability of the cores such that the impedance of the AC coils increases. The feedback coils can be energized, for example, from an independent DC power supply controlled by voltage drop on FCL or by a power supply connected in parallel to the FCL and including a step-down transformer and rectifier. In the latter case, the input voltage of the power supply is proportional to the voltage drop across the FCL. At normal operation, current in the feedback coils is very small and bas no influence on FCL operation. At fault conditions, the current in the feedback coils increases to compensate for the magnetizing effect of the bias coils. It is important that the current in the feedback coils reaches the necessary threshold during the first half cycle after a fault event to decrease the initial rise in current. The feedback coils can be made of copper wire with relatively small cross-section because they operate for only short time (4-5 half-cycles) and the resulting heating is therefore small.

An additional effect of using the feedback coils consists (as a result of increasing the core permeability) in a strong reduction of the leakage AC field that has a negative influence on the superconducting bias coil.

The feedback coils allow the mass of the device to be reduced regardless of the type of core employed. To this end, in accordance with a second aspect of the invention, there is provided a current limiting device for an AC supply, said current limiting device comprising for each phase of the AC supply:
at least two series-connected AC coils adapted to be connected in series with a load, said coils being placed on respective limbs of at least one magnetic circuit,
at least one superconducting bias coil for each magnetic circuit for biasing the magnetic circuit into saturation at normal conditions, characterised in that
at least one feedback coil for each bias coil for creating a magnetic flux that is dependent on a voltage drop across the current limiting device and in an opposite direction to a direction of a magnetic flux of the bias coil so as to put the magnetic circuit out of saturation thereby increasing the impedance of the magnetic circuit and decreasing the current through the current limiter.

In accordance with another aspect of the invention, there is provided a method for reducing mass of said current limiting device for an AC supply, said current limiting device comprising for each phase of the AC supply:
a magnetic circuit,
at least one superconducting bias coil surrounding said magnetic circuit for biasing the magnetic circuit into saturation at normal conditions, and
two series-connected AC coils adapted to be connected in series with a load; said method comprising:
   **(a)** reducing a mass of the magnetic circuit by:
      **i)** forming the magnetic circuit of a pair of open elongated rod-shaped magnetic limbs;
      **ii)** placing each of said AC coils on a respective one of said limbs; and
      **iii)** configuring the AC coils so as to produce magnetic fields of mutually opposing polarities so that in use during successive half cycles of the AC supply one of the AC coils produces a magnetic field that opposes a magnetic field of the bias coil; and/or
   **(b)** reducing a mass of the AC coils by:
      **i)** associating with the AC coils at least one feedback coil having a magnetic flux that is in an opposite direction to respective magnetic fluxes of the bias coils for moving the magnetic circuit out of saturation thereby allowing the number of turns or the cross-sectional area of the AC coils to be reduced.

In order to decrease the weight and dimensions of the device, the ferromagnetic cores may have the form of elongated rods in contrast to the closed magnetic circuit in the known FCL Thus the volume of the cores is approximately halved. At the same time the effective permeability of the rod is much less than the effective permeability of the closed magnetic circuit as illustrated by their Weber-Ampère characteristics. As a result, with the same parameters of the coil and the core cross-section, the maximal current of the current limiter with the rod core is larger. Thus the current limiter with the rod core should preferably operate so that the flux linkage does not surpass the upper knee of its Weber-Ampère characteristic thus reducing the effective impedance of the FCL. In contrast to the closed magnetic circuits, the properties of the rods are dependent on the positional relationship of the rods that has to be taken into account when designing the current limiter. By selection of the proper positional relationship of the rods, the necessary number of Ampere-turns of the AC coils and/or the bias coils and feedback coils may be decreased.

Another way of decreasing the weight and dimensions of the device is to use a combined structure in which the AC coils are located on two limbs of the elongated closed magnetic circuit. By such means, there is only one core instead of the two cores typically provided in known configurations. In the configuration according to the invention, the inductance of the two AC coils is about four times as large as the inductance of one coil because both AC coils are situated in a single magnetic circuit with additive polarity. This permits use of a core of smaller cross-section and/or fewer turns in the AC coils. Each bias coil and feedback coil encloses both long limbs of magnetic circuit. This arrangement ensures minimal AC magnetic field on the bias coil and minimal AC voltage on the bias coil and on the feedback coil because almost all the AC magnetic flux is enclosed within these coils. The AC field has a strong influence on the critical current of superconducting coils and for additionally decreasing this field a conductive and magnetic screen can be placed around the bias coil.

Introducing a small air gap in this closed elongated core configuration allows the FCL parameters to be adjustable. To decrease the number of Ampère-turns of the bias coil, two magnetic circuits having respective bias fields in opposite directions can be placed very close one to another thus decreasing the reluctance of the magnetic circuit of the bias coils.

The proposed designs according to the invention, both that having rod cores and that having combined closed cores, give the additional advantage of leaving sufficient space for disposition of cryostats with superconducting bias coils. These advantages are tangible regardless of whether the feedback coil is used as provided for by the invention. Thus operational performance of the FCL may be enhanced by using an additional feedback coil while physical size of the FCL may be reduced by the novel magnetic structure of the invention and these benefits can be used either singly or in combination.

A further realization of the invention is evident with the addition of a third central limb to the closed magnetic cores described above. The bias coil and the optional feedback coil are mounted on the said central limb. The two AC coils are placed on the outermost limbs. An additional advantage of this design as compared with those described above is the closed magnetic circuit of the bias coil and feedback coil that allows their Ampère-turns to be reduced in number.

According to a further embodiment of the present invention, in order to decrease manufacturing cost of the current limiter, it is assembled with standard modules that have the optimal size for the convenience of manufacturing and installation.

### BRIEF DESCRIPTION OF THE DRAWINGS

In order to understand the invention and to see how it may be carried out in practice, some preferred embodiments will now be described, by way of non-limiting example only, with reference to the accompanying drawings, in which:
**Fig. 1** shows pictorially a prior art closed core configuration of a saturated core single phase FCL;
**Fig. 2** is a schematic circuit diagram showing the prior art single phase FCL of Fig. 1 in use;
**Fig. 3** shows linkage-current **Ψ(I_{AC})** curves of the saturated core FCL shown in Fig. 1 with and without feedback coils;
**Figs. 4a, 4b and 4c** show rod shaped cores for a single phase FCL according to different embodiments of the invention;
**Fig. 5a, 5b, 5c and 5d** show a saturated core FCL for a single phase with having a closed saturated core according to different embodiments.
**Fig. 6** shows a saturated core FCL according to another embodiment of the invention having two AC coils on outermost limbs and bias and feedback coils on a central limb of a closed shell-type core; and
**Fig. 7a** is a schematic circuit diagram showing a single phase FCL according to the invention with independent power supply of the feedback coils;
**Fig. 7b** is a schematic circuit diagram showing a single phase FCL according to the invention with power supply of the feedback coils connected in parallel with the FCL.

### DETAILED DESCRIPTION OF THE INVENTION

In the following description various embodiments are described. To the extent that many features are common to different embodiments, identical reference numerals will be employed to refer to components that are common to more than one figure.

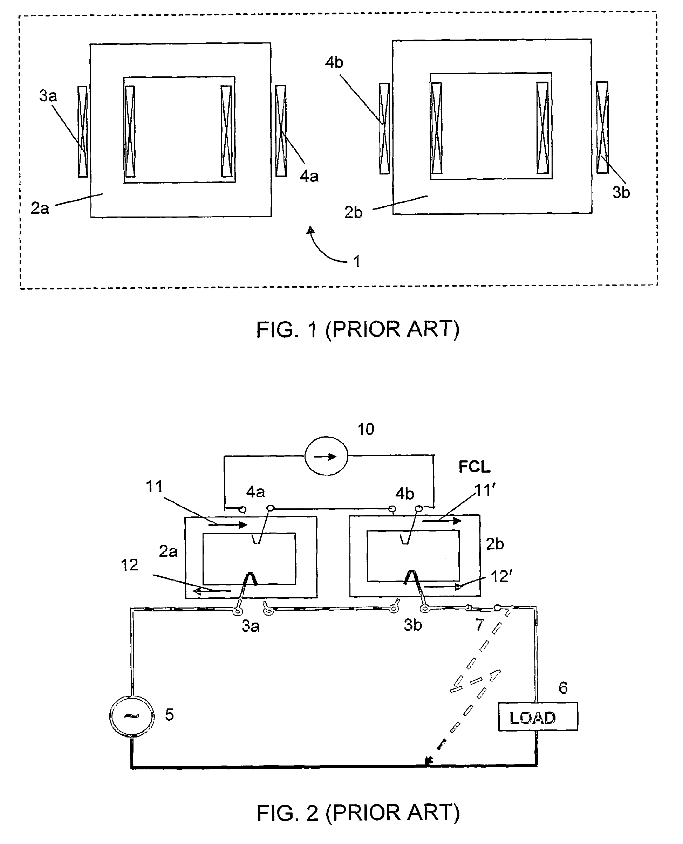

In order more fully to appreciate the benefit of the invention, it will be instructive first to consider a typical prior art single phase FCL. To this end, Fig. 1 shows pictorially a prior art saturated core single phase FCL designated generally as **1** having a pair of closed magnetic cores **2a** and **2b** each supporting a respective AC coil **3a** and **3b.** The cores further support a pair of DC superconducting bias coils **4a** and **4b.**

Fig. 2 shows schematically a circuit diagram showing the single phase FCL **1** in use. An AC supply **5,** typically from the electric power grid, is connected to a load **6** via a circuit breaker **7.** In series with the load 6 are connected the two AC coils **3a** and **3b** of the FCL. The respective superconducting bias coils **4a** and **4b** are connected to a DC power supply **10.** At any moment the direction of the bias magnetic flux **11** in one core coincides with the direction of the magnetic flux **12** of AC coil whereas the direction of the bias magnetic flux **11'** in the other core is opposite to the direction of the magnetic flux **12'** of the AC coil. Under normal conditions, the bias coils **4a** and **4b** saturate the respective cores **2a** and **2b.** Under fault conditions, the AC coils **3a** and **3b** draw the respective cores **2a** and **2b** out of saturation during opposite half cycles of the AC cycle, thereby causing their average inductance to increase and thus limiting an increase of the current.

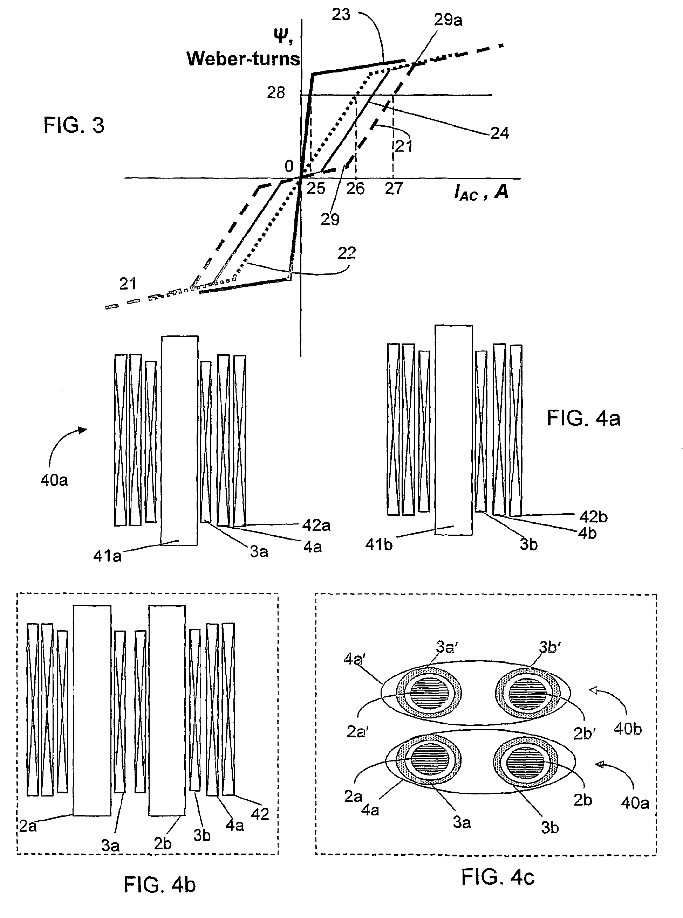

Fig. 3 shows graphically in curve **21** the linkage-current **Ψ(I_{AC})** characteristic of the prior art saturated core FCL, shown in Fig. 1. The curves 22 and 23 shown alongside the curve **21** are corresponding flux linkage-current **Ψ(I_{AC})** characteristics of a saturated core FCL according to the invention and are explained in greater detail below. The amplitude of magnetic flux linkage of the coil is proportional to the amplitude of the voltage drop on the FCL. When the flux linkage is below the lower knee **29** of the curve **21** the cores are saturated and the voltage drop across the FCL is small. At fault conditions, however, the voltage drop on the FCL can be close to the voltage of the grid and the current increases. But after the lower knee **29** on the curve **21** corresponding to an unsaturated core, the magnetic flux linkage rises more steeply for a given change in current since the FCL exhibits a larger average inductance that slows the current increase for a given change in voltage.

As noted above, one aspect of the invention is the use of feedback coils. Fig. 3 also shows the characteristic **Ψ(I_{AC}) 22** of the core with the feedback coils, that fully compensate for the magnetic fluxes of the bias coils, intersects the point of origin and corresponds to the steep part only of the characteristic **21** of the core without the feedback coils. Thus the maximal current corresponding to a given flux linkage (and voltage) at fault conditions can be decreased. A given flux linkage **28** corresponds to a current magnitude **27** for the FCL without feedback coils and to a lesser current magnitude **26** for the FCL with feedback coils. When the flux created by the feedback coils is less than the flux of the bias coil, the characteristic **Ψ(I_{AC}) 24** mediates and the average inductance of the AC coils has an intermediate value.

It will be understood from the foregoing that the use of feedback coils provides improved performance even when used with the prior art core shown in Fig. 1. Specifically, according to present invention the feedback coils can be used in any design of saturated core FCL.

The use of the feedback coils allows the magnetic core design to be changed such that the mass of the core decreases. The cancellation of the bias field during a fault increases the effective permeability of the magnetic core. As a result, the core cross section may be reduced as compared to an FCL with the same primary coil impedance and without feedback coil. Three different exemplary designs will now be described.

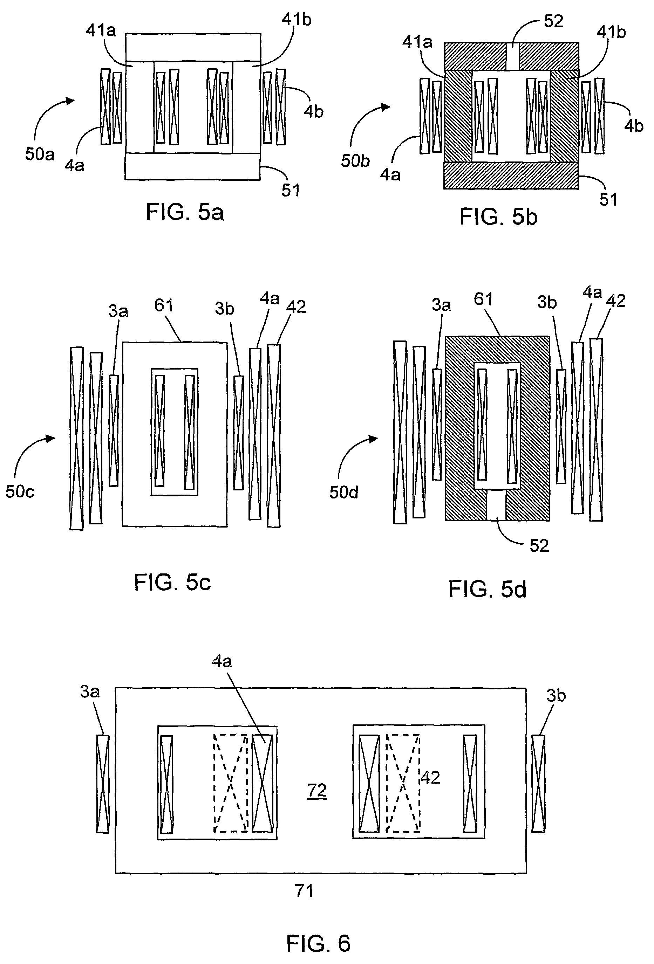

Figs. 4a and 4b show a first design having two elongated rod-shaped cores **41a, 41b** for a single phase instead of the two closed cores used in known designs (shown in Fig. 1). The volume of the rod-shaped cores is about half that of the closed cores shown in Fig. 1. The AC coil **3a,** bias coil **4a** and optionally a feedback coil **42a** are mounted coaxially on the rod-shaped core **41a.** In like manner, the AC coil **3b,** bias coil **4b** and optional feedback coil **42b** are mounted coaxially on the rod-shaped core **41b.** Separate bias coils may be used with a feedback coil on every core (as shown in Fig. 5a) or a common bias coil **4a** and optional feedback coil **42** may be wound on both cores (as shown in Fig. 4b). Use of common bias coils has the advantage of smaller induced AC voltage across the bias coils as well as reduction of the mass of the core.

Fig. 4c shows schematically in plan view an assembly of two pairs of cores as shown in Fig. 4b that are juxtaposed so that the magnetic fields of adjacent bias coils are additive. For each pair of cores only the AC coils **3a, 3b** and the bias coil **4a** are shown. In the lower part of the figure (corresponding to the core shown in elevation in Fig. 4b), a single bias **coil 4a** encompasses both cores **2a** and **2b.** The upper part of the figure corresponds to another core matching the one shown in elevation in Fig. 4b and having similar reference numerals distinguished by the prime symbol ('). In this case also, a single bias coil **4a'** encompasses both cores **2a'** and **2b'.** However, the magnetic flux of the two bias coils **4a** and **4a'** are in opposite directions: one going into the paper and the other coming out of the paper so that the resulting magnetic forces are mutually attractive. The cores are shown by way of example with an open magnetic circuit, but a closed magnetic circuit may also be used.

Figs. 5a and 5b show a second design of device shown as **50a** and **50b** respectively that includes for each phase at least one elongated closed core **50a** having limbs **41a** and **41b** each supporting a respective AC coil. The limbs **41a** and **41b** are coupled at opposite ends by respective magnetic arms **51** thereby closing the magnetic circuit. In the device **50a** the magnetic circuit is closed completely, while in the device **50b** an air gap **52** is provided. By adjusting the thickness of the air gap **52,** magnetic properties of the substantially closed core may be varied.

Figs. 5c and 5d show devices **50c** and **50d,** respectively that are similar in arrangement to those shown in Figs. 5a and 5b, respectively. However, whereas in the devices **50a** and **50b** shown in Figs. 5a and 5b, separate AC and bias coils are wound around each limb **41a, 41b** of the core, in the devices **50c** and **50d** separate AC coils **3a, 3b** are wound around each limb **41a, 41b** of the core but a single bias **coil 4a** is commonly wound around both limbs as is the optional feedback coil **42,** thus further reducing the mass of the core.

Referring back to Fig. 3, the closed core has a much steeper **Ψ(I_{AC})** characteristic **23** than an open core. This ensures a smaller current magnitude **25** or allows decreasing the cross-section of the core and/or number of Ampere-turns of the AC coils. The aiding connection of AC coils ensures about two times bigger inductance of both AC coils as compared with other designs because the AC coils have a common magnetic flux. The bias coil **3a** and feedback coil **42** enclose both limbs of the core and surround both AC coils. Almost all the magnetic flux of the AC coils passes inside the core, thus the total alternating magnetic flux inside the bias and feedback coils almost vanishes and the AC voltage on these coils is very small.

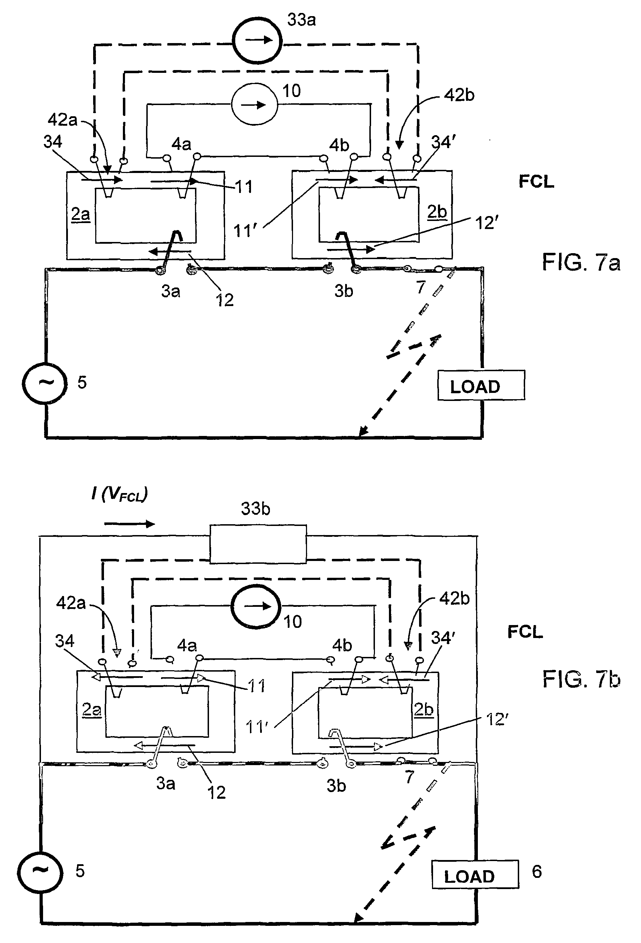

Fig. 6 shows a third design that includes for each phase at least one shell-type core **71** with two AC coils **3a, 3b** on the outermost limbs and a common bias coil **4a** and an optional feedback coil **42** (shown dotted) placed on a central limb **72** of the core. Magnetically, the shell-type core **71** may be considered as a closed core as shown in Fig. 5a or 5c whose limbs **2a, 2b** constitute the outermost limbs of the shell-type core **71** but having an extra limb in between the limbs **2a, 2b.** This design has the same advantages as the previous design. The magnetic flux of the AC coils does not pass inside the central limb of the core and thus inside bias coil and feedback coil. Actually at normal conditions there is no induced AC voltage on the bias coils because the full AC magnetic flux inside the bias coil is zero. However, at fault conditions, the bias coil is exposed to alternating magnetic fields that decrease the critical current of the superconducting bias coil and degrade its performances. The coil design has to take into account the AC fields during fault time. A conductive electromagnetic screen may to be used to minimize these fields. The 3-phase FCL includes at least three identical elements, at least one element for each phase.

Fig. 7a is a schematic circuit diagram showing a FCL according to the first embodiment of the invention. It will be seen that the FCL includes all elements of the known FCL as described above with reference to Fig. 5a and in addition includes two feedback coils **42a** and **42b** energized by a DC power supply **33a.** During a fault condition, the voltage drop across the AC coils **3a** and **3b** increases. The power supply is energized according to this voltage drop and thereby causes the current through the feedback coils also to increase. The magnetic flux **34** and **34'** created by the feedback coils is in the opposite direction to the respective magnetic fluxes **11** and **11'** of the bias coils **4a** and **4b,** and therefore moves the whole core out of saturation. In this condition both AC coils have high impedance during both halves of cycle. As a result, the voltage drop across each AC coil is only half of the voltage drop across the FCL. This allows the number of turns of the AC coils to be decreased. In this connection, it will be noted that the inductance is given by L ∼ µ A N². The feedback increases µ thus allowing either A (core cross-section) or N (number of turns in the AC coil) to be reduced while maintaining the overall FCL impedance. Thus the feedback coil provides another way to achieve the objective of the invention of reducing core size. Fig. 7b shows schematically an FCL having the same components as shown in Fig. 7a but with power supply 33b of the feedback coils connected in parallel to the FCL or to the pair of its AC coils that are concerned with these feedback coils. In this case the feedback is realized directly. During a fault, a voltage drop on the FCL and thus on the power supply increases and results in increasing current in the feedback coils.

The invention also proposes an FCL assembly having a saturated core with standard elements (modules) of a size that allows building an FCL assembly with necessary parameters by connecting a required number of modules in series and/or in parallel. Each module is an FCL as described above with reference to Figs. 4 to 6 of the drawings. When placing the modules together it is necessary to calculate the parameters of the FCL assembly taking into account a superposition of the magnetic fluxes of the adjacent modules. This superposition can ensure a smaller amount of Ampere-turns of bias coils and AC coils. Each module can have separate bias and feedback coils or the bias and feedback coils can be common for several modules. For example, as shown schematically in Fig. 4c two modules having closed cores can be placed one near the other in such a way that the magnetic fluxes of their bias coils have opposite directions. It will be understood that the bias coil has an open magnetic circuit in the elongated core configuration, so that placing two proximate modules in opposite directions has the effect of closing their magnetic circuit. In this case the reluctance of the magnetic circuit of these coils is smaller, and a smaller number of Ampère-turns is required.

According to another aspect of the invention any of the core designs described with reference to Figs. 4 to 6 can be used in a saturated core FCL or in an FCL assembly comprising such FCL modules with or without feedback coils.

### Example of FCL with 1 closed core for each phase

This FCL assembly example consists of modules that include for a single phase one closed saturated core having two AC-coils: one coil on each leg; bias coil and feedback coil are wound around the core with AC coils. It is used as a module in the 3-phase FCL assembly.

**Parameters:**

| | |
|---|---|
| Rated power | W=1.67 MVA |
| Rated voltage | V=3kV |
| Rated current | I=0.556 kA |
| Rated impedance | Z=5.4 Ohm |
| Reactance at normal operation | X=0.23 Ohm |
| Reactance at fault conditions | X=2.2 Ohm |
| Steady state current at fault conditions | I_{SS}=1.93 kA |
| Maximal fault current | I_{MAX}=7 kA |

**Dimensions and masses:**

| | |
|---|---|
| Height of the core | 3.15 m |
| Diameter of the core | 0.18 m |
| Mass of the core | 1.4 tonne |
| Mass of the copper coils | 0.4 tonne |
| Mass of the feedback coils | 0.06 tonne |
| SC bias coil | 77 kAmpère-turns |

**3-phase FCL with 1 closed core for each phase**

| Rated power, MVA | 5 | 10 | 15 | 20 |
|---|---|---|---|---|
| Numbers of modules | 3 | 6 | 9 | 12 |
| Rated phase voltage, kV | 3 | 6 | 9 | 12 |
| Rated phase current, kA | 0.556 | 0.556 | 0.556 | 0.556 |
| Rated impedance, Ohm | 5.4 | 10.8 | 16.2 | 21.6 |
| Total mass of the cores, tonne | 4.2 | 8.4 | 12.6 | 16.8 |

## Claims

1. A current limiting device (40a) for an AC supply, said current limiting device comprising for each phase of the AC supply:
a magnetic circuit,
at least one superconducting bias coil (4a, 4b) surrounding said magnetic circuit for biasing the magnetic circuit into saturation at normal conditions, and
two series-connected AC coils (3a, 3b) adapted to be connected in series with a load;
each of said AC coils being placed on a respective limbs of the magnetic circuit and being configured so as to produce magnetic fields of mutually opposing polarities so that in use during successive half cycles of the AC supply one of the AC coils produces a magnetic field that opposes a magnetic field of the bias coil;
**characterized in that:**
said magnetic circuit comprises a pair of open elongated rod-shaped magnetic limbs (41a, 41b).

2. The current limiting device (50c, 50d) according to claim 1, wherein the at least one superconducting bias coil (4a) comprises either a single coil wound round both limbs of the magnetic circuit or a pair of coils (4a, 4b) each being wound round a respective limb of the magnetic circuit.

3. The current limiting device (50a, 50b, 50c, 50d) according to claim 1 or 2, wherein proximate ends of both limbs (41a, 41b) are magnetically coupled so as to close the magnetic circuit at each end of the limbs.

4. The current limiting device (50b, 50d) according to claim 3, wherein an air gap (52) is formed in the magnetic circuit.

5. The current limiting device according to any one of claims 1 to 4, further comprising at least one feedback coil (42) for each bias coil for creating a magnetic flux that is dependent on a voltage drop across the current limiting device and in an opposite direction to a direction of a magnetic flux of the respective bias coil so as to put the magnetic circuit out of saturation thereby increasing the impedance of the magnetic circuit and decreasing the current through the current limiter.

6. The current limiting device according to claim 5, wherein the at least one feedback coil is supplied by an independent power supply (33a) providing a current having a magnitude that is controlled by a voltage drop on the device.

7. The current limiting device according to claim 5, wherein in use the at least one feedback coil is supplied by a rectified power supply (33b) connected in parallel with the current limiting device.

8. The current limiting device according to any one of claims 3, 4, 6 or 7, wherein:
said pair of limbs form outermost limbs of a shell-type closed magnetic core (71) further comprising a central limb (72) that supports thereon a respective bias coil (4a), and
the central limb (72) supports thereon a feedback coil (42).

9. The current limiting device according to claim 8 being a multi-phase FCL having at least two cores each in respect of a different phase, said current limiting device having a single bias coil common to at least two central limbs of respective cores of the magnetic circuit.

10. The current limiting device according to claim 9, further comprising a single feedback coil common to at least two central limbs of respective cores of the magnetic circuit.

11. The current limiting device according to any one of claims 3 to 7, wherein the at least one superconducting bias coil (4a) comprises a pair of coils (4a, 4b) each being wound round a respective limb of the magnetic circuit and having at least one bias coil that is common to more than one limb of the magnetic circuit.

12. A current limiting assembly comprising at least two current limiting devices according to any one of claims 1 to 11, each current limiting device having at least one respective bias coil.

13. The current limiting assembly according to claim 12, further including at least one respective feedback coil.

14. The current limiting assembly according to claim 12 or 13, comprising at least two current limiting devices or current limiting assemblies.

15. A current limiting assembly comprising at least two proximate current limiting devices (40a, 40b) according to any one of claims 1 to 7, and configured such that the magnetic fluxes of the respective bias coils (4a, 4a') of adjacent devices are in mutually opposite directions.

16. A current limiting device (40a) for an AC supply, said current limiting device comprising for each phase of the AC supply:
at least two series-connected AC coils (3a, 3b) adapted to be connected in series with a load, said coils being placed on respective limbs (41a, 41b) of at least one magnetic circuit,
at least one superconducting bias coil (4a, 4b) for each magnetic circuit for biasing the magnetic circuit into saturation at normal conditions,
**characterised in that** it further comprises
at least one feedback coil (42a, 42b) for each bias coil for creating a magnetic flux that is dependent on a voltage drop across the current limiting device and in an opposite direction to a direction of a magnetic flux of the bias coil so as to put the magnetic circuit out of saturation thereby increasing the impedance of the magnetic circuit and decreasing the current through the current limiter.

17. The current limiting device according to claim 16, wherein the at least one superconducting bias coil (4a, 4b) comprises either a single bias coil (4a) commonly wound round the limbs (41a, 41b) of the magnetic circuit or a pair of bias coils (4a, 4b) each being wound round a respective limb.(41a, 41b) of the magnetic circuit.

18. The current limiting device (50a, 50b, 50c, 50d) according to claim 16 or 17, wherein proximate ends of both limbs (41a, 41b) are magnetically coupled so as to close the magnetic circuit at each end of the core.

19. The current limiting device (50b, 50d) according to claim 18, wherein an air gap (52) is formed in the magnetic circuit.

20. A method for reducing mass of a current limiting device according to claim 1 or 16 (40a) for an AC supply, said current limiting device comprising for each phase of the AC supply:
a magnetic circuit,
at least one superconducting bias coil (4a, 4b) surrounding said magnetic circuit for biasing the magnetic circuit into saturation at normal conditions, and
two series-connected AC coils (3a, 3b) adapted to be connected in series with a load;
said method comprising:
**(a)** reducing a mass of the magnetic circuit by:
**i)** forming the magnetic circuit of a pair of open elongated rod-shaped magnetic limbs (41a, 41b);
**ii)** placing each of said AC coils on a respective one of said limbs; and
**iii)** configuring the AC coils so as to produce magnetic fields of mutually opposing polarities so that in use during successive half cycles of the AC supply one of the AC coils produces a magnetic field that opposes a magnetic field of the bias coil; and/or
**(b)** reducing a mass of the AC coils by:
**i)** associating with the AC coils at least one feedback coil (42a, 42b) having a magnetic flux (34, 34') that is in an opposite direction to respective magnetic fluxes (11, 11') of the bias coils (4a, 4b) for moving the magnetic circuit out of saturation thereby allowing the number of turns or the cross-sectional area of the AC coils to be reduced.

## Patentansprüche

1. Strombegrenzer (40a) für eine Wechselstromquelle, enthaltend für jede Phase der Wechselstromquelle:
einen Magnetkreis,
mindestens eine den Magnetkreis umgebende supraleitende Vormagnetisierungsspule (4a, 4b) für die Vormagnetisierung des Magnetkreises in Sättigungszustand unter normalen Bedingungen; und
zwei in Reihe geschaltete Wechselstromspulen (3a, 3b) für die Reihenschaltung mit einer Last;
jede Wechselstromspule (3a, 3b) ist an einem jeweiligen Schenkel des Magnetkreises angeordnet und zur Herstellung von Magnetfeldern mit zueinander gegenteiligen Polaritäten konfiguriert so dass im Betrieb während der nacheinander folgenden Halbzyklen der Wechselstromquelle die eine Wechselstromspule ein zu einem Magnetfeld der Vormagnetisierungsspule gegenteiliges Magnetfeld erzeugt;
**dadurch gekennzeichnet, dass**
der erwähnte Magnetkreis ein Paar offene, längliche stangenförmige magnetische Schenkel (41a, 41b) enthält.

2. Strombegrenzer (50c, 50d) nach Anspruch 1, wobei die mindestens eine Vormagnetisierungsspule (4a) entweder eine um beiden Schenkeln des Magnetkreises gewickelte Spule oder ein Paar Spulen (4a, 4b) enthält die um einem jeweiligen Schenkel des Magnetkreises gewickelt sind.

3. Strombegrenzer (50a, 50b, 50c, 50d) nach Anspruch 1 oder 2, wobei die benachbarten Enden beider Schenkel (41a, 41b) derart magnetisch gekoppelt sind, dass der Magnetkreis an jedem Ende der Schenkel geschlossen ist.

4. Strombegrenzer (50b, 50d) nach Anspruch 3, wobei ein Luftspalt (52) in dem Magnetkreis ausgebildet ist.

5. Strombegrenzer nach einem der Ansprüche 1 bis 4, enthaltend weiterhin mindestens eine Rückkopplungsspule (42) für jede Vormagnetisierungsspule, für die Erzeugung eines Magnetflusses der von dem Spannungsabfall am Strombegrenzer abhängig und gegen die Richtung des Magnetflusses der zugehörigen Vormagnetisierungsspule gerichtet ist, um den Magnetkreis aus dem Sättigungszustand zu bringen und **dadurch** die Impedanz des Magnetkreises zu erhöhen und den Strom über den Strombegrenzer zu verringern.

6. Strombegrenzer nach Anspruch 5, wobei die mindestens eine Rückkopplungsspule mittels einer unabhängigen Spannungsquelle (33a) gespeist wird, die einen Strom von einer durch den am Strombegrenzer anfallenden Spannungsabfall gesteuerten Grösse liefert.

7. Strombegrenzer nach Anspruch 5, wobei im Betrieb die mindestens eine Rückkopplungsspule mittels einer, zum Strombegrenzer parallel geschalteten gleichgerichteten Spannungsquelle (33b) gespeist wird.

8. Strombegrenzer nach einem der Ansprüche 3, 4, 6 oder 7, wobei:
das erwähnte Paar Schenkel bildet die äußersten Schenkel eines geschlossenen Mantelmagnetkreises (71) der auch einen mittleren Schenkel (72) aufweist der eine jeweilige Vormagnetisierungsspule (4a) trägt, und
der mittlere Schenkel (72) eine Rückkopplungsspule (42) trägt.

9. Strombegrenzer nach Anspruch 8, ausgebildet als ein Mehrphasen-Fehlerstrombegrenzer mit mindestens zwei, zu unterschiedlichen Phasen zugeordneten Kernen, wobei der Strombegrenzer eine einzige, für mindestens zwei mittlere Schenkel der jeweiligen Kerne des Magnetkreises gemeinsame Vormagnetisierungsspule aufweist.

10. Strombegrenzer nach Anspruch 9, der eine weitere einzige, für mindestens zwei mittlere Schenkel der jeweiligen Kerne des Magnetkreises gemeinsame Rückkopplungsspule aufweist.

11. Strombegrenzer nach einem der Ansprüche 3 bis 7, wobei die mindestens eine supraleitende Vormagnetisierungsspule (4a) ein Paar um einen jeweiligen Schenkel des Magnetkreises gewickelte Spulen (4a, 4b), sowie mindestens eine, für mehrere Schenkel des Magnetkreises gemeinsame Vormagnetisierungsspule enthält.

12. Strombegrenzungs-Baugruppe, die über mindestens zwei Strombegrenzer nach einem der Ansprüche 1 bis 11 verfügt, wobei jeder Strombegrenzer mindestens eine jeweilige Vormagnetisierungsspule enthält.

13. Strombegrenzungs-Baugruppe nach Anspruch 12, die über mindestens eine jeweilige Rückkopplungsspule verfügt.

14. Strombegrenzungs-Baugruppe nach Anspruch 12 oder 13, die mindestens zwei Strombegrenzer oder Strombegrenzungs-Baugruppe enthält.

15. Strombegrenzungs-Baugruppe, die über mindestens zwei benachbarte Strombegrenzer (40a, 40b) nach einem der Ansprüche 1 bis 7 verfügt und derart konfiguriert ist, dass die Magnetflusse der jeweiligen Vormagnetisierungsspulen (4a, 4a') von benachbarten Strombegrenzern wechselseitig gegenteilig gerichtet sind.

16. Strombegrenzer (40a) für eine Wechselstromquelle, enthaltend für jede Phase der Wechselstromquelle:
mindestens zwei in Reihe geschaltete Wechselstromspulen (3a, 3b) für die Reihenschaltung mit einer Last, genannte Spulen sind an jeweiligen Schenkeln (41a, 41b) mindestens eines Magnetkreises angebracht,
mindestens eine supraleitende Vormagnetisierungsspule (4a, 4b) für die Vormagnetisierung des Magnetkreises in Sättigungszustand unter normalen Bedingungen;
**dadurch gekennzeichnet, dass**
mindestens eine Rückkopplungsspule (42a, 42b) für jede Vormagnetisierungsspule für Erzeugung eines Magnetflusses enthält, der von dem Spannungsabfall am Strombegrenzer abhängig und gegen die Richtung des Magnetflusses der zugehörigen Vormagnetisierungsspule gerichtet ist, um den Magnetkreis aus dem Sättigungszustand zu bringen und **dadurch** die Impedanz des Magnetkreises zu erhöhen und den Strom über den Strombegrenzer zu verringern.

17. Strombegrenzer nach Anspruch 16, wobei die mindestens eine supraleitende Vormagnetisierungsspule (50c, 50d) entweder eine gemeinsam um den Schenkeln (41a, 41b) des Magnetkreises gewickelte Spule (4a) oder ein Paar Spulen (4a, 4b) enthält die um einem jeweiligen Schenkel (41a, 41b) des Magnetkreises gewickelt sind.

18. Strombegrenzer (50a, 50b, 50c, 50d) nach Anspruch 16 oder 17, wobei die benachbarten Enden beider Schenkel (41a, 41b) derart magnetisch gekoppelt sind, dass der Magnetkreis an jedem Ende des Kerns geschlossen ist.

19. Strombegrenzer (50b, 50d) nach Anspruch 18, wobei ein Luftspalt (52) in dem Magnetkreis ausgebildet ist.

20. Verfahren zur Verringerung der Masse eines Strombegrenzers (40a) nach Anspruch 1 oder 16 für eine Wechselstromquelle, der genannte Strombegrenzer enthält für jede Phase der Wechselstromquelle:
einen Magnetkreis,
mindestens eine den Magnetkreis umgebende supraleitende Vormagnetisierungsspule (4a, 4b) für die Vormagnetisierung des Magnetkreises in Sättigungszustand unter normalen Bedingungen; und
zwei in Reihe geschaltete Wechselstromspulen (3a, 3b) für die Reihenschaltung mit einer Last;
das genannte Verfahren umfasst:
**(a)** Verringerung der Masse des Magnetkreises mittels:
**i)** Ausbildung den Magnetkreis eines Paares offener, länglichen stangenförmigen magnetischen Schenkel (41a, 41b)
**ii)** Anordnung jeder Wechselstromspule an dem jeweiligen Schenkel; und
**iii)** Konfigurierung der Wechselstromspulen zur Herstellung von Magnetfeldern mit zueinander gegenteiligen Polaritäten so dass im Betrieb während der nacheinander folgenden Halbzyklen der Wechselstromquelle die eine Wechselstromspule ein zu einem Magnetfeld der Vormagnetisierungsspule gegenteiliges Magnetfeld erzeugt; und/oder
**(b)** die Verringerung der Masse der Wechselstromspulen mittels:
**i)** Zuordnung mindestens einer Rückkopplungsspule (42a, 42b) den Wechselstromspulen, wobei die Rückkopplungsspule einen Magnetfluss (34, 34') aufweist der gegen die Richtung des Magnetflusses (11, 11') der Vormagnetisierungsspulen (4a, 4b) gerichtet ist, um den Magnetkreis aus dem Sättigungszustand zu bringen und **dadurch** die Verringerung der Zahl der Wicklungen oder der Querschnittsfläche der Vormagnetisierungsspulen zu ermöglichen.

## Revendications

1. Dispositif de limitation de courant (40a) pour une alimentation en courant alternatif, ledit dispositif comprenant pour chaque phase de l'alimentation alternative:
un circuit magnétique,
au moins une bobine de pré-magnétisation (4a, 4b) supraconductrice encadrant ledit circuit magnétique afin de pré-magnétiser le circuit magnétique à saturation sous les conditions normales et,
deux bobines à courant alternatif (3a, 3b) pour permettre une connexion en série d'une charge;
chacune desdites bobines à courant alternatif étant posée sur les jambes respectives du circuit magnétique et étant configurée à produire des champs magnétique de la polarité opposée l'une à l'autre afin qu'en usage, pendant les demis cycles de l'alimentation alternative, une desdites bobines à courant alternatif fournisse un champ magnétique opposé à celui de la bobine de pré-magnétisation;
**caractérisé en ce que**
dudit circuit magnétique comporte une paire de jambes magnétiques (41a, 41b) ouvertes en forme de bâtonnet allongé.

2. Dispositif de limitation de courant (50c, 50d) selon la revendication 1, **caractérisé en ce que** le au moins une bobine de pré-magnétisation (4a) comporte soit une bobine unique enroulée autour les deux jambes dudit circuit magnétique soit une paire de bobines (4a, 4b) chacune étant enroulée autour une jambe respective.

3. Dispositif de limitation de courant (50a, 50b, 50c, 50d) selon la revendication 1 ou 2, **caractérisé en ce que** les extrémités avoisinantes des deux jambes (41a, 41b) sont couplées par champ magnétique afin de fermer le circuit magnétique à chaque extrémité des jambes.

4. Dispositif de limitation de courant (50b, 50d) selon la revendication 3, **caractérisé en ce qu'**un entrefer est formé dans le circuit magnétique.

5. Dispositif de limitation de courant selon une des revendications précédentes, comportant au moins une bobine de rétroaction (42) pour chacune des bobines de pré-magnétisation afin de créer un flux magnétique dépendant de la chute de potentiel sur le dispositif de limitation de courant ledit flux étant opposé au sens du flux de la bobine de pré-magnétisation respective, afin de couper la saturation du circuit magnétique ainsi augmentant l'impédance du circuit magnétique et abaissant le courant passant par le dispositif de limitation de courant.

6. Dispositif de limitation de courant selon la revendication 5, **caractérisé en ce que** le au moins une bobine de rétroaction est alimentée par une alimentation électrique (33a) indépendante, fournissant un courant ayant une amplitude commandée par une chute de potentiel sur le dispositif.

7. Dispositif de limitation de courant selon la revendication 5, **caractérisé en ce qu'**en usage au moins une bobine de rétroaction est alimentée par une alimentation électrique redressée (33b) étant connectée en série avec le dispositif de limitation de courant.

8. Dispositif de limitation de courant selon une des revendications 3, 4, 6 ou 7, **caractérisé en ce que**:
ladite paire de jambes forme les jambes périphériques d'un noyau magnétique (71) fermé d'un circuit magnétique cuirassé et comprenant en outre une jambe centrale (72) supportant une bobine de pré-magnétisation (4a) respective et une bobine de rétroaction (42).

9. Dispositif de limitation de courant selon la revendication 8, étant un limiteur de courant de défaut et ayant au moins deux noyaux pour les différentes phases respectives, ledit dispositif ayant une unique bobine de pré-magnétisation commune pour au moins deux jambes centraux des noyaux respectifs du circuit magnétique.

10. Dispositif de limitation de courant selon la revendication 9, comprenant en outre une unique bobine de rétroaction commune pour au moins deux jambes centraux des noyaux respectifs du circuit magnétique.

11. Dispositif de limitation de courant selon une des revendications 3 à 7, **caractérisé en ce que** le au moins une bobine de pré-magnétisation (4a) supraconductrice comporte une paire de bobines (4a, 4b), chacune desdites bobines étant enroulées autour une jambe respective du circuit magnétique et ayant au moins une bobine de pré-magnétisation commune pour plus qu'une seule jambe du circuit magnétique.

12. Ensemble de limiteur de courant comprenant au moins deux dispositifs de limitation de courant selon une des revendications précédents, chacun des dispositifs ayant au moins une bobine de pré-magnétisation respective.

13. Ensemble de limiteur de courant selon la revendication 12, comprenant en outre au moins une bobine de rétroaction respective.

14. Ensemble de limiteur de courant selon la revendication 12 ou 13, comprenant au moins deux dispositifs de limitation de courant ou deux ensembles de limiteur de courant.

15. Ensemble de limiteur de courant comprenant au moins deux dispositifs de limitation de courant (40a, 40b) avoisinants selon une des revendications 1 à 7 et configuré ainsi que les flux magnétiques des bobines de pré-magnétisation (4a, 4a') respectives des dispositifs avoisinants soient en sens opposé.

16. Dispositif de limitation de courant (40a) pour une alimentation en courant alternatif, ledit dispositif comprenant pour chaque phase de l'alimentation alternative:
au moins deux bobines à courant alternatif (3a, 3b) connectées en série pour permettre une connexion en série d'une charge, lesdites bobines étant posée sur les jambes (41a, 41b) respectives d'au moins un circuit magnétique,
au moins une bobine de pré-magnétisation (4a, 4b) supraconductrice pour chacun desdits circuits magnétiques afin de pré-magnétiser le circuit magnétique à saturation sous les conditions normales,
**caractérisé en ce que**
le dispositif comporte en outre au moins une bobine de rétroaction (42a, 42b) pour chacune des bobines de pré-magnétisation afin de créer un flux magnétique dépendant de la chute de potentiel sur le dispositif de limitation de courant ledit flux étant opposé au sens du flux de la bobine de pré-magnétisation, afin de couper la saturation du circuit magnétique ainsi augmentant l'impédance du circuit magnétique et abaissant le courant passant par le dispositif de limitation de courant.

17. Dispositif de limitation de courant selon la revendication 16, **caractérisé en ce que** le au moins une bobine de pré-magnétisation (4a, 4b) comporte soit une bobine unique de pré-magnétisation (4a) enroulée autour les deux jambes (41 a, 41b) dudit circuit magnétique soit une paire de bobines de pré-magnétisation (4a, 4b) chacune étant enroulées autour une jambe (41a, 41b) respective du circuit magnétique.

18. Dispositif de limitation de courant (50a, 50b, 50c, 50d) selon la revendication 17, **caractérisé en ce que** les extrémités avoisinantes des deux jambes (41a, 41b) sont couplées par champ magnétique afin de fermer le circuit magnétique à chaque extrémité des jambes.

19. Dispositif de limitation de courant (50b, 50d) selon la revendication 18, **caractérisé en ce qu'**un entrefer est formé dans le circuit magnétique.

20. Procédé pour la réduction de la masse d'un dispositif de limitation de courant (40a) selon la revendication 1 ou 16 pour une alimentation en courant alternatif, ledit dispositif comprenant pour chaque phase de l'alimentation alternative:
un circuit magnétique
au moins une bobine de pré-magnétisation (4a, 4b) supraconductrice encadrant ledit circuit magnétique afin de pré-magnétiser le circuit magnétique à saturation sous les conditions normales et,
deux bobines à courant alternatif (3a, 3b) pour permettre une connexion en série d'une charge;
ledit procédé comprenant:
**(a)** la réduction de la masse du circuit magnétique par:
**i)** formation du circuit magnétique d'une paire de jambes magnétiques (41a, 41b) ouvertes en forme de bâtonnet allongé;
**ii)** mettant chacune des bobines à courant alternatif sur une jambe respective; et
**iii)** configurant les bobines à courant alternatif à produire des champs magnétique de la polarité opposée l'une à l'autre afin qu'en usage une desdites bobines à courant alternatif fournisse un champ magnétique opposé à celui de la bobine de pré-magnétisation; et/ou
**(b)** la réduction de la masse du circuit magnétique en:
**i)** associant avec les bobines à courant alternatif au moins une bobine de rétroaction (42a, 42b) ayant un flux magnétique (34, 34') opposé au sens des flux respectifs des bobines de pré-magnétisation (4a, 4b), afin de couper la saturation du circuit magnétique ainsi permettant la réduction du nombre de spires ou la section transversal des bobines à courant alternatif à réduire.
